# EUROPÄISCHE PATENTANMELDUNG

(11) **EP 2 317 193 A1**
(43) Veröffentlichungstag der Anmeldung: **04.05.2011**
(21) Anmeldenummer: 09013192.1
(22) Anmeldetag: 20.10.2009
(51) Int. Cl.: F16K 31/60

(54) **Sanitärarmatur mit verschiebbar gelagtertem Betätigungshebel**

(71) Anmelder: KWC AG, 5726 Unterkulm (CH)
(72) Erfinder: Leutwyler, André, 5737 Menziken (CH)
(74) Vertreter: Schaad, Balass, Menzl & Partner AG

(57) **Zusammenfassung**

Die vorliegende Erfindung betrifft eine Sanitärarmatur (10) mit einem Armaturengehäuse (12) und einer in diesem angeordnete Steuerpatrone (36). Die Steuerpatrone (36) weist einen Steuerschaft (52) auf, der schwenkbar in der Steuerpatrone (36) gelagert ist. Auf dem Steuerschaft (52) ist verschiebbar ein Betätigungshebel (22) gelagert, der zwischen einer Schliessstellung und einer Offenstellung Hoch- und Niederschwenkbar ist um dabei den Wasserfluss zu steuern. Im Weiteren ist eine Lasche (58) einerends am Führungselement (60) und anderends an einer, bezüglich der Schwenkachse (A), fest angeordneten und zu dieser parallelen Drehachse (C) gelagert. Durch diese Anordnung ist beim Schwenken des Betätigungshebels (22) aus der Schliessstellung in Richtung gegen die Offenstellung dieser auch in Richtung vom Steuerschaft (52) und, in Richtung der Patronenachse (B), vom Armaturengehäuse (12) weg bewegt.

## Beschreibung

Die vorliegende Erfindung betrifft eine Sanitärarmatur gemäss Patentanspruch 1.

Bei bekannten Sanitärarmaturen ist der Betätigungshebel fest auf dem Steuerschaft einer Steuerpatrone angeordnet. Die Steuerpatrone ist in einem Armaturengehäuse aufgenommen. Durch Hoch- und Niederschwenken des Betätigungshebels wird der Wasserdurchfluss durch die Sanitärarmatur gesteuert. Dabei kann ein Konflikt zwischen dem Betätigungshebel und dem Armaturengehäuse auftreten. Um dies auszuschliessen, müssen, bei bestimmten Formen von Armaturengehäuse und Betätigungshebel, am Armaturengehäuse beziehungsweise am Betätigungshebel Ausnehmungen angebracht sein. Dies ist nicht sehr ästhetisch und erleichtert das Eindringen von Schmutz und Wasser in das Armaturengehäuse.

Eine Sanitärarmatur, die diesen Nachteil nicht mehr aufweist, ist in der älteren Patentanmeldung EP 08 007 342.2 offenbart. Die in dieser Patentanmeldung offenbarte Konstruktion zeigt einen Betätigungshebel, dessen Hebelachse in einer Kulisse geführt ist. Beim Verschwenken des Betätigungshebels aus der Schliessstellung in die Offenstellung ist ein Konflikt zwischen dem Armaturengehäuse und dem Betätigungshebel verhindert, indem die Kulisse den Abstand des Betätigungshebels zum Gehäuse entsprechend steuert.

Es ist eine Aufgabe der vorliegenden Erfindung eine Sanitärarmatur zu schaffen, deren Konstruktion einfach ist und einen Konflikt zwischen dem Armaturengehäuse und dem Betätigungshebel verhindert

Diese Aufgabe wird mit einer Sanitärarmatur gelöst, welche die Merkmale des Patentanspruchs 1 aufweist.

Durch die verschiebbare Lagerung eines Führungselements des Betätigungshebels auf dem Steuerschaft und mittels einer Lasche ist beim Hoch- und Niederschwenken des Betätigungshebels ein Konflikt zwischen dem Betätigungshebel und dem Armaturengehäuse vermieden. Dabei ist die Lasche einerends am Führungselement und anderenends an einer bezüglich einer Schwenkachse des Steuerschafts fest angeordneten und zu dieser parallelen Drehachse gelagert. Weiter bewegt die Lasche den Betätigungshebel, bei dessen Bewegung aus einer Schliessstellung in Richtung gegen eine Offenstellung, vom Steuerschaft und, in Richtung einer Patronenachse gesehen, vom Armaturengehäuse weg.

Eine bevorzugte Ausführungsform der erfindungsgemässen Sanitärarmatur ist im Patentanspruch 2 definiert. In der Schliessstellung bildet die Längsrichtung der Lasche mit der Patronenachse, in Ansicht in Richtung der Schwenkachse gesehen, einen spitzen Winkel. Weiter ist die Drehachse, bezüglich der Patronenachse, auf einer dem bedienungsseitigen Ende abgewandten Seite angeordnet.

Eine besonders einfache Ausführungsform der erfindungsgemässen Sanitärarmatur ist im Patentanspruch 3 angegeben.

Eine weitere bevorzugte Ausführungsform ist im Patentanspruch 4 definiert. Ein Lagerelement ist dabei am Armaturengehäuse, vorzugsweise um die Patronenachse drehbar, angeordnet. Die Drehachse der Lasche ist durch das Lagerelement festgelegt. Dies führt zu einem einfachen Aufbau und ermöglicht auf einfache Art und Weise, das Drehen des Steuerschafts um die Patronenachse, beispielsweise zum Einstellen einer Mischwassertemperatur.

Eine weitere besonders bevorzugte Ausführungsform ist im Patentanspruch 7 definiert. Bei einer solchen Ausführungsform weist der Betätigungshebel bei Ausrichtung der Lasche parallel zur Patronenachse, in Richtung der Patronenachse gesehen, den grössten Abstand zum Armaturengehäuse auf.

Weitere bevorzugte Ausführungsformen der erfindungsgemässen Sanitärarmatur sind in den übrigen abhängigen Patentansprüchen angegeben.

Die Erfindung wird anhand eines in der Zeichnung dargestellten Ausführungsbeispiels erläutert. Es zeigen rein schematisch:
- Fig. 1: in einem mittigen Längsschnitt eine erfindungsgemässe Sanitärarmatur mit einer ausziehbaren Brause;
- Fig. 2: in einem mittigen Längsschnitt entlang der Linie II - II der Fig. 3 durch einen Steuerschaft einen Teil der Sanitärarmatur, wobei sich der Betätigungshebel in einer Schliessstellung befindet;
- Fig. 3: eine Draufsicht auf die Sanitärarmatur mit dem Betätigungshebel ebenfalls in der Schliessstellung;
- Fig. 4: in einem seitlich versetzten Längsschnitt entlang der Linie IV-IV der Fig. 3, bei einer Lasche, einen Teil der Sanitärarmatur, wobei sich der Betätigungshebel wie in Fig. 2 und 3 in der Schliessstellung befindet;
- Fig. 5: in einem Querschnitt entlang der Linie V-V der Fig. 3 durch eine Drehachse der Laschen, einen Teil der Sanitärarmatur mit dem Betätigungshebel in der Schliessstellung;
- Fig. 6: in einem Querschnitt entlang VI-VI durch obere Stummelbolzen der Laschen einen Teil der Sanitärarmatur mit dem Betätigungshebel in der Schliesssteilung;
- Fig. 7: eine Draufsicht auf ein Lagerelement;
- Fig. 8: in einem Längsschnitt entlang der Linie VIII- VIII der Fig. 7 das Lagerelement;
- Fig. 9: eine perspektivische Ansicht des Lagerelements mit Ausnehmungen für die Aufnahme von Laschen;
- Fig. 10: eine perspektivische Ansicht von schräg unten eines Betätigungshebeleinsatzes mit einem Führungselement und Stummelbolzen für die Aufnahme der Laschen;
- Fig. 11: in gleicher Darstellung wie Fig. 4, einen Teil der Sanitärarmatur, wobei der Betätigungshebel aus der Schliessstellung um einen Öffnungswinkel von 10° hochgeschwenkt ist;
- Fig. 12: in gleicher Darstellung wie Fig. 4 und 11, einen Teil der Sanitärarmatur, wobei der Betätigungshebel aus der Schliessstellung um einen Öffnungswinkel von 20° hochgeschwenkt ist;
- Fig. 13: in gleicher Darstellung wie Fig. 2, einen Teil der Sanitärarmatur, wobei sich der Betätigungshebel in maximaler Offenstellung befindet; und
- Fig. 14: in gleicher Darstellung wie Fig. 4, 11 und 12, einen Teil der Sanitärarmatur, wobei sich der Betätigungshebel ebenfalls in maximaler Offenstellung befindet.

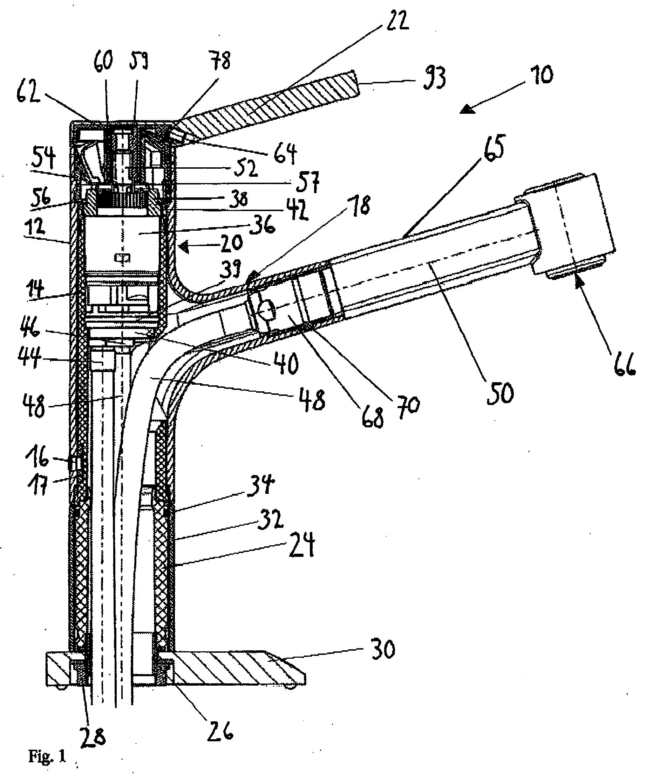

Fig. 1 zeigt einen vertikalen Längsschnitt durch eine erfindungsgemässe Sanitärarmatur 10. Die Sanitärarmatur 10 weist ein Armaturengehäuse 12 und ein darin angeordnetes Innengehäuse 14 auf. Das Armaturengehäuse 12 ist hohlzylinderförmig ausgebildet und auf dem Innengehäuse 14, mittels einer Feststellschraube 16, die am Armaturengehäuse 12 eingeschraubt ist und einem Führungselement 17, das eine in Umfangsrichtung verlaufende Führungskulisse, in die die Feststellschraube 16 eingreift aufweist, in axialer Richtung gehalten und in Richtung der Patronenachse B drehbar gelagert. An dem Armaturengehäuse 12 ist einstückig ein Auslauffortsatz 18 angeordnet. Das Armaturengehäuse 12 weist eine äussere Mantelfläche 20 auf, die im vorliegenden Fall kreiszylinderförmig ausgebildet ist. In einer Schliessstellung ist ein Betätigungshebel 22 unmittelbar anschliessend, unter Bildung eines, in Umfangsrichtung umlaufenden Spalts 23, an die kreiszylinderförmige, äussere Mantelfläche 20 angeordnet. Der umlaufende Spalt 23 weist über den gesamten Umfang eine konstante Breite auf. Vorzugsweise ist diese Breite sehr schmal, daher kleiner als 1mm, besonders bevorzugt kleiner als 0.5mm.

Das Innengehäuse 14 ist auf ein hülsenförmiges Sockelinnengehäuse 24, welches in bekannter Art und Weise mittels einer Hülse 26 und einer entsprechenden Klemmutter 28 an einem Waschtisch 30 befestigt ist, aufgeschraubt. Das Sockelinnengehäuse 24 ist von einem Sockelaussengehäuse 32 umfasst, welches über eine O-Ring-Dichtung 34 auf dem Sockelinnengehäuse 24 gehalten ist. Dabei ist eine Art Reibschluss-Verbindung zwischen dem Sockelinnengehäuse 24 und dem Sockelaussengehäuse 32 ausgebildet. Die O-Ring-Dichtung 34 ist im oberen Bereich des Sockelinnengehäuses 24 angeordnet und verhindert das Eindringen von Schmutz und Wasser in die Sanitärarmatur.

Das Sockelaussengehäuse 32 und das Armaturengehäuse 12 sind vorzugsweise aus Metall hergestellt, währenddem das Innengehäuse 14 und das Sockelinnengehäuse 24 vorzugsweise aus Kunststoff hergestellt sind.

Eine allgemeine bekannte Steuerpatrone 36, die zum Steuern des Wasserdurchflusses durch die Sanitärarmatur dient, ist mittels einer Feststellmutter 38 im Innengehäuse 14 fest angeordnet. Dabei stützt sich die Steuerpatrone 36 mit ihren Dichtungen 39 am Boden auf einem Zwischenboden 40 des Innengehäuses 14 ab. In einem oberen, dem Betätigungshebel 22 zugewandten Bereich, greift die Feststellmutter 38 in ein Innengewinde 42 des Innengehäuses 14 ein und spannt so die Steuerpatrone 36 auf den Zwischenboden 40. An diesem Zwischenboden 40 sind Durchlässe für Anschlüsse 44 für Kalt- und Warmwasser und für einen Ausfluss 46 für das Mischwasser ausgebildet. Das Mischwasser wird mittels eines Schlauches 48 einer ausziehbaren Brause 50 zugeführt.

Die Steuerpatrone 36 weist, in bekannter Art und Weise, einen Steuerschaft 52 auf, der um eine Schwenkachse A, die rechtwinklig eine Patronenachse B kreuzt, die durch die Steuerpatrone 36 festgelegt ist, verläuft, schwenkbar ist. Die Patronenachse B fällt mit der Achse der Sanitärarmatur 10 zusammen. Der Steuerschaft 52 wirkt mit dem Betätigungshebel 22 zusammen und zwar derart, dass durch Verschwenken um die Schwenkachse A der Wasserdurchfluss und durch Drehen um die Patronenachse, B die Temperatur, in bekannter Art und Weise, festgelegt werden kann.

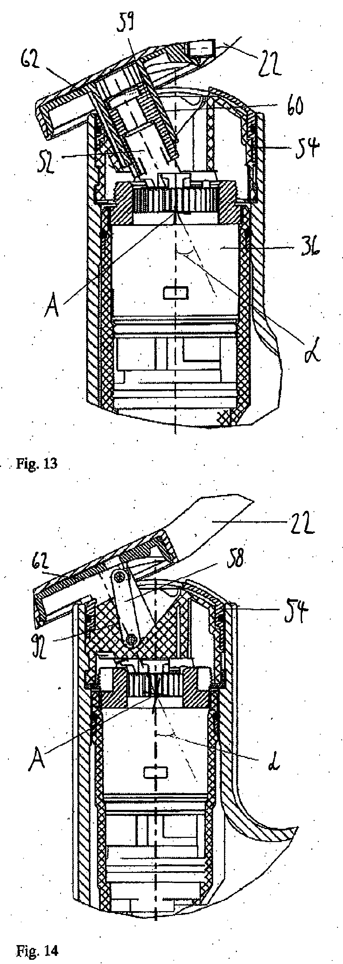

Der Steuerschaft 52 durchgreift, ein Lagerelement 54, das drehbar um die Patronenachse B mittles eines, hier offenen, L-Rings 56 am Armaturengehäuse 12 gelagert ist. Der L-Ring 56 ist als Spannring ausgebildet und durch eine, im Armaturengehäuse 12 ausgebildete Wulst 57 in axialer Richtung gehalten. Das Lagerelement 54 dient zur Lagerung mindestens einer Lasche 58, im vorliegenden Fall eines Laschenpaares. Der Betätigungshebel 22 kann aus einer Schliessstellung wie in Fig. 1 gezeigt, in eine Offenstellung, vgl. Fig. 13 und 14 hochgeschwenkt und von dieser Offenstellung wieder in eine Schliessstellung niedergeschwenkt werden. Im gezeigten Ausführungsbeispiel verläuft - in der Schliessstellung - die Längsrichtung des Steuerschafts 52 in Richtung der Patronenachse B und beim Verschwenken des Betätigungshebels 52 von der Schliessstellung in Richtung gegen die Offenstellung bildet sich ein öffnungswinkel α, vgl. Fig. 13.

Auf dem Steuerschaft 52 ist ein Gleitelement 59 befestigt und auf diesem ist, in Längsrichtung des Steuerschafts 52, verschiebbar ein Führungselement 60 gelagert. Das Führungselement 60 ist mit einem kappenförmigen Betätigungshebeleinsatz 62 ausgebildet und dieser ist mit dem Betätigungshebel 22 unbeweglich und fest verbunden. Es ist auch denkbar, das Führungselement 60 als separates Element auszubilden und dieses am Betätigungshebel 22 beziehungsweise am kappenförmigen Betätigungshebeleinsatz 62 zu befestigen, oder das Führungselement 60, den Betätigungshebel 22 und den Betätigungshebeleinsatz 62 integral auszubilden. Das Führungselement 60 ist hohlzylinderförmig ausgebildet, durchgreift das Lagerelement 54 und der Aussenquerschnitt des Gleitelements 59 entspricht dem Innenquerschnitt des Führungselements 60.

Der Betätigungshebel 22 ist mittels einer Feststellschraube 64, vorzugsweise einer Madenschraube, am Betätigungshebeleinsatz 62 befestigt.

Die Brause 50 weist einen Griff 65 auf, welcher einerends einen Brausekopf 66 und anderenends einen Anschlussstutzen 68 trägt. Der Anschlussstutzen 68 ist im Auslauffortsatz 18 des Armaturengehäuses 12 versenkbar. An ihm ist der Schlauch 48, welcher das Mischwasser führt, befestigt. Durch diese Anordnung ist es möglich, die Brause 50 aus dem Auslauffortsatz 18 herauszuziehen, es handelt sich hiermit um eine Ausziehbrause. Um ein Eindringen von Wasser und Schmutz zwischen dem Auslauffortsatz 18 und dem Anschlussstutzen 68 zu vermeiden, ist ein Dichtungselement 70 auf der Innenseite des Auslauffortsatzes 18 angeordnet. Dieses dient weiter dazu, die Brause 50, mittels einer Art Reibschlussverbindung im Auslauffortsatz 18 ausziehbar zu halten.

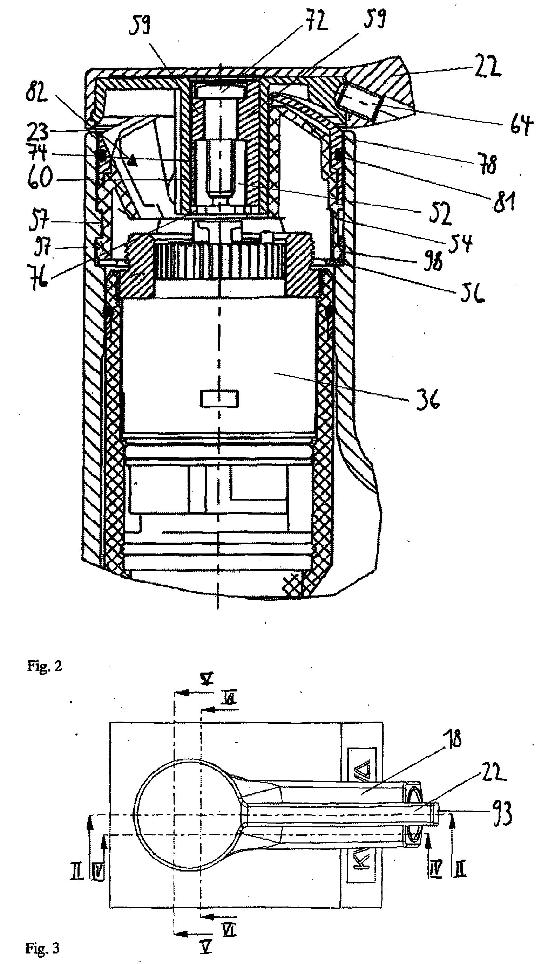

Fig. 2 zeigt einen Längsschnitt entlang der Linie II-II der Fig. 3 durch den oberen, dem Waschtisch 30 abgewandten Bereich der Sanitärarmatur 10. In Fig. 2 befindet sich der Betätigungshebel 22 in der Schliessstellung und die Längsachse des Steuerschafts 52 ist parallel zur Patronenachse B ausgerichtet. Auf dem Steuerschaft 52 ist das Gleitelement 59 mittels einer Schraube 72 befestigt. Dieses Gleitelement 59 greift in das Führungselement 60 ein. Mittels einer Nut 74 im Gleitelement 59 und einer Rippe 76 am Führungselement 60 ist das Gleitelement 59 verdrehsicher im Führungselement 60 gelagert. Anschliessend an das obere Ende des Innengehäuses 14, welches im Bereich der Feststellmutter 38 liegt, ist der L-Ring 56 am Armaturengehäuse 12 angeordnet, der zur axialen Lagerung des Lagerelements 54 am Armaturengehäuse 12 dient.

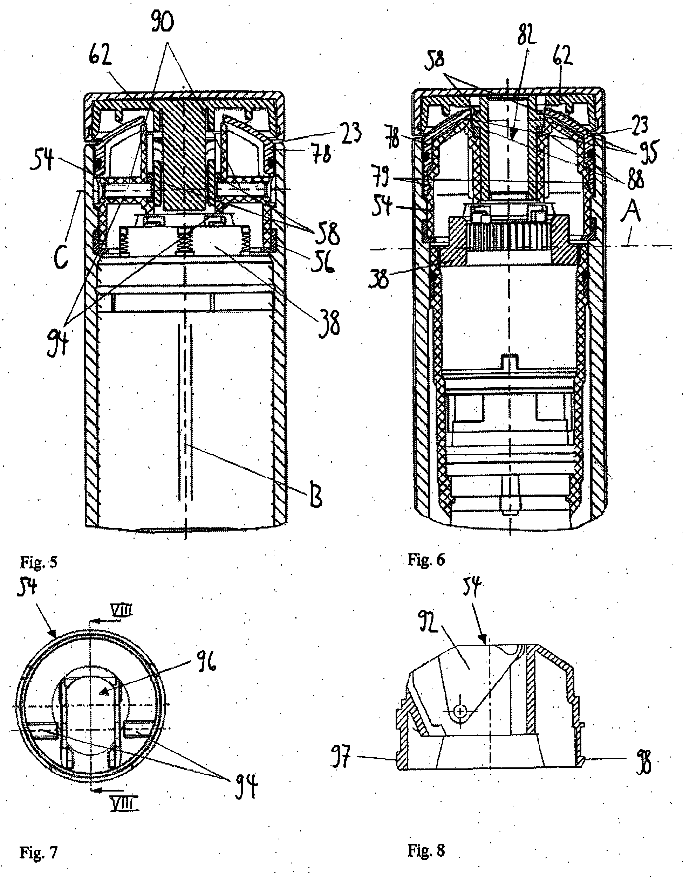

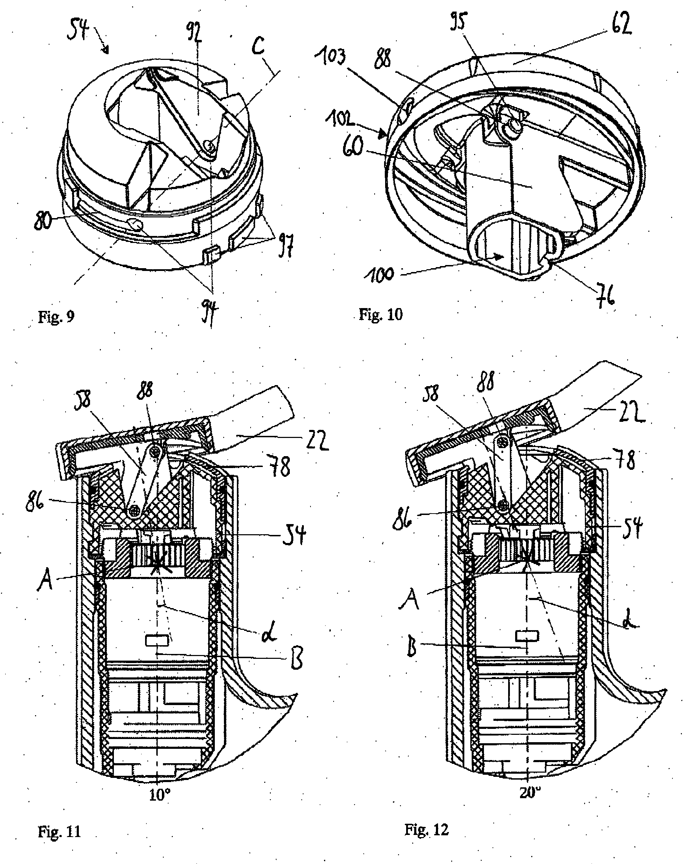

Auf dem Lagerelement 54 ist eine Kappe 78, mittels einer Schnappverbindung auf das Lagerelement 54 drehfest aufgesetzt. Diese Kappe 78 dreht also mit dem Lagerelement 54 mit. Die Schnappverbindung ist über Zungen 79 an der Kappe 78, die in gegengeformte Nuten 80 am Lagerelement 54 eingreifen, hergestellt, siehe auch Fig. 6 und 9. Zwischen der Kappe 78 und dem Armaturengehäuse 12 ist eine Nutring Dichtung 81 angeordnet, die das Eindringen von Schmutz und Wasser in das Armaturengehäuse 12 verhindert. Die Kappe 78 überdeckt das Lagerelement 54 vollständig, mit Aufnahme eines Durchlasses 82 der vom Führungselement 60 beziehungsweise dem Gleitelement 59 durchgriffen ist. Dieser Durchlass 82 ist nur geringfügig breiter ausgebildet als das Führungselement 60 und schützt so den inneren Bereich der Sanitärarmatur 10 vor dem Eindringen von Schmutz und Wasser, wenn sich der Betätigungshebel 22 nicht in der Schliessstellung befindet. Weiter lässt der Durchlass 82 in der Kappe 78 das Schwenken des Betätigungshebels 22 von der Schliessstellung in die Offenstellung zu.

Fig. 3 zeigt eine Draufsicht auf die Sanitärarmatur 10 in der Schliessstellung, daher bei einem Öffnungswinkel von 0°. In Fig. 3 sind die verschiedenen Schnittlinien eingezeichnet, welche sich auf die Figuren 2, 4, 5 und 6 beziehen. Die Fig. 3 zeigt den Betätigungshebel 22 und den Auslauffortsatz 18 des Armaturengehäuses 12 ohne die Brause 50.

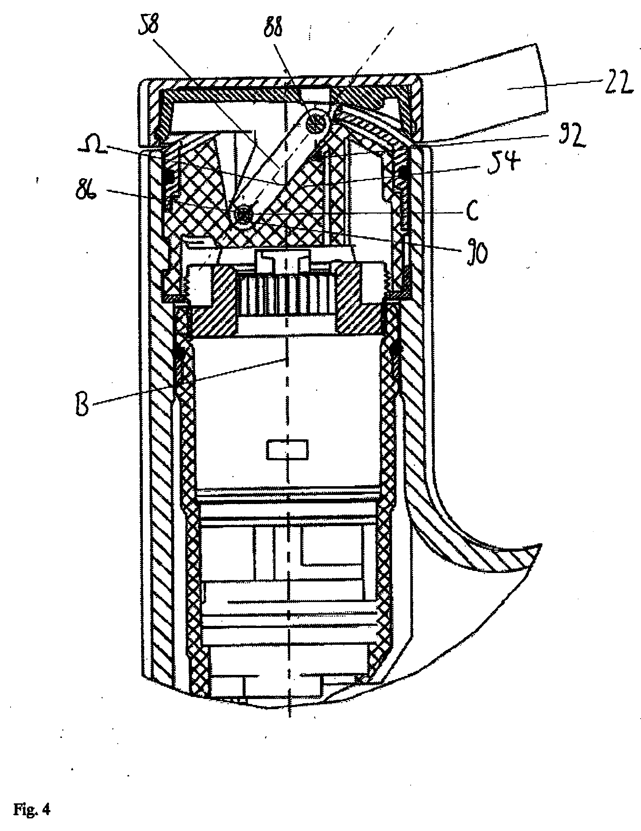

Fig. 4 zeigt einen Längsschnitt entlang der Linie IV-IV der Fig. 3. Die Lasche 58, die einerends am Führungselement 60 und andercnends an einer bezüglich der Schwenkachse fest angeordneten und zu dieser parallelen Drehachse C gelagert ist, dient dazu, den Betätigungshebel 22 beim Schwenken aus der Schliessstellung in Richtung gegen die Offenstellung in Richtung vom Steuerschaft 52 weg und in Richtung der Patronenachse B gesehen, vom Armaturengehäuse 12 weg zu bewegen. Die Drehachse C, welche durch eine, der Steuerpatrone 36 zugewandte, untere Anlenkung 86 verläuft, ist am Lagerelement 54 angeordnet und durch dieses festgelegt. Eine, dem Betätigungshebel 22 zugewandte und der Steuerpatrone 36 abgewandte obere Anlenkung 88 ist am Führungselement 60 angeordnet. Die untere Anlenkung 86 ist durch einen Lagerstift 90 gebildet, an dem die Lasche 58 schwenkbar gelagert ist. Die Bewegungsfreiheit der Lasche 58 ist durch Ausnehmungen 92 im Lagerelement 54 begrenzt und zwar so, dass die Lasche 58, beziehungsweise der Betätigungshebel 22, nicht über eine maximale Offenstellung beziehungsweise einen Öffnungswinkel von hier 25° hinaus und nicht über die Schliessstellung beziehungsweise einen Öffnungswinkel von 0° in Richtung des Auslauffortsatzes 18 hinunter, geschwenkt werden kann. In der Schliessstellung des Betätigungshebels 22, bildet die Lasche 58, in Ansicht in Richtung der Schwenkachse A gesehen, mit ihrer Längsrichtung mit der Patronenachse B einen spitzen Winkel Q. Im Weiteren liegt die Drehachse C der unteren Anlenkung 86 der Lasche 58, bezüglich der Patronenachse B, auf einer, einem bedienungsseitigen Ende 93 des Betätigungshebels 22 abgewandten Seite, siehe auch Fig. 1. Dazu befinden sich Aussparungen 94, durch welche der Lagerstift 90 hindurchgeführt ist, in dem Lagerelement 54 und zwar auf der, dem bedienungsseitigen Ende abgewandten Seite des Betätigungshebels 22. Der Lagerstift 90 verläuft koaxial zur Drehachse C und ist am Lagerelement 54 angeordnet. Dies ist in den Fig. 5, 7 und 8 gezeigt.

Vorzugsweise sind - wie im vorliegenden Ausführungsbeispiel - zwei Laschen 58 seitlich, auf jeder Seite je eine, am Führungselement 60 und entsprechend zwei Lagerstifte 90 am Lagerelement 54, angeordnet. Die Laschen 58 können sich dabei in je einer, zu einer Bewegungsebene des Steuerschafts 52 parallelen Ebene, bewegen. Der in Fig. 4 gezeigte Schnitt verläuft nur durch eine der Laschen 58. In den Fig. 5 und 6 hingegen, sind beide Laschen gezeigt.

Fig. 5 zeigt einen Schnitt entlang der Linie V - V der Fig. 3, durch die sich in der Schliessstellung befindende Sanitärarmatur 10. Die Sanitärarmatur 10 ist dabei durch die untere Anlenkung 86, daher durch die Drehachse C der Laschen 58 geschnitten. Die Lagerstifte 90 welche die Laschen 58 aufnehmen, verlaufen von einem radial äusseren Ende des Lagerelements 54 bis zur unteren Anlenkung 86 der Laschen 58. Die Bewegung der Laschen 58 in seitlicher Richtung, daher in Richtung der Drehachse C, ist mittels des Lagerelements 54 und des Betätigungshebeleinsatzes 62 verhindert. Die Aussparungen 94 im Lagerelement 54 sind in Fig. 5 ebenfalls gezeigt. Die drehbare Lagerung des Lagerelements 54 mittels des L-Rings 56 ist in dieser Ansicht gut erkennbar. Die Steuerpatrone 36 ist in einer Seitenansicht und nicht geschnitten gezeigt.

Fig. 6 zeigt einen Schnitt entlang der Linie VI - VI der Fig. 3 durch die sich in der Schliessstellung befindende Sanitärarmatur 10. Die Sanitärarmatur 10 ist dabei durch die obere Anlenkung 88, durch Stummelbolzen 95 des Führungselements 60, an welchen die Laschen 58 schwenkbar befestigt sind, geschnitten gezeigt. In dieser

Seitenansicht ist auch der Durchlass 82, der durch die Kappe 78 verläuft, gut erkennbar. Die Laschen 58 durchgreifen diesen Durchlass 82, dadurch entsteht beim Hoch- und Niederschwenken des Betätigungshebels 22 kein Konflikt zwischen der Kappe 78 und den Laschen 58.

Fig. 7 zeigt eine Draufsicht auf das Lagerelement 54 mit den Aussparungen 94 für die Lagerstifte 90 die am Lagerelement 54 befestigt werden. Der Durchlass 82 der Kappe 78, in Fig. 7 nicht gezeigt, fluchtet, im montierten Zustand, mit einer Ausnehmung 96 im Lagerelement 54. Die Ausnehmung 96 erlaubt das Hoch- und Niederschwenken des Betätigungshebels 22. Die Laschen 58 werden an den Lagerstiften 90 gelagert.

Fig. 8 zeigt einen Längsschnitt entlang der Linie VIII-VIII der Fig. 7 durch das Lagerelement 54. Entlang der Umfangsrichtung des Lagerelements 54, auf der dem bedienungsseitigen Ende 93 abgewandten Seite, sind Nocken 97 und, auf der, dem bedienungsseitigen Ende 93 zugewandten Seite, eine kleine Nase 98 am Lagerelement 54 angebracht, die zur sicheren axialen Lagerung des Lagerelements 54 am Armaturengehäuse 12 dienen. Die Nocken 97 greifen, im montierten Zustand, in gegengleiche Aussparungen am L-Ring 56 ein und untergreifen dabei den im Armaturengehäuse 12 ausgebildeten Wulst 57. Die Nase 98 greift, im montierten Zustand, in einen gegengleichen, entsprechenden radialen Durchlass im L-Ring ein. Durch diese Anordnung ist das Lagerelement 54, in axialer Richtung, im Armaturengehäuse 12 gehalten, siehe Fig. 2.

Selbstverständlich können diese Nocken 97 auch für die Begrenzung der Drehbewegung verwendet werden. Weiter ist mittels der kleinen Nase 98, die an dem bedienungsseitigen Ende 93 des Lagerelements 54 angebracht ist, das Lagerelement 54 im L-Ring 56 gehalten. Die Nocken 97 und die Nase 98 sind auf einer, dem Boden des Lagerelements 54 zugewandten Seite, abgeschrägt, um eine einfache, schnappende Montage des Lagerelements 54 zu ermöglichen.

Fig. 9 zeigt eine perspektivische Draufsicht des einstückigen Lagerelements 54 mit dem Durchlass 82 und den, zum Durchlass 82 hin offenen Ausnehmungen 92 für die Laschen 58. Weiter sind in Fig. 9 die Aussparungen 94 für die Lagerstifte 90 gezeigt.

Fig. 10 zeigt eine perspektivische Untersicht des einstückigen Betätigungshebeleinsatzes 62. Die Rippe 76, welche in einer Führungsausnehmung 100 am Führungselement 60 angeordnet ist, ist dazu bestimmt in die Nut 74 am Gleitelement 59 einzugreifen und so als Verdrehsicherung des Betätigungshebels 22 zu wirken. Am oberen, dem Steuerschaft 52 abgewandten Ende des Führungselements 60 sind die Stummelbolzen 95 für die Laschen 58 an diesem angeformt. An einer Mantelfläche des kappenförmigen Deckelabschnitts 102 weist der Betätigungshebeleinsatz 62 eine Mulde 103 auf, in welche, im montierten Zustand, die Feststellschraube 64 eingreift. Das Führungselement 60 steht mittig vom kappenförmigen Deckelabschnitt 102 nach unten, im montierten Zustand, in Richtung der Steuerpatrone 36 ab.

Fig. 11 zeigt die Sanitärarmatur 10 mit dem Betätigungshebel 22, der um einen Öffnungswinkel α von 10° hochgeschwenkt ist. Bei der Bewegung aus der Schliessstellung in die gezeigte Öffnungsstellung, hat die Lasche 58 den Betätigungshebel 22 in Richtung vom Steuerschaft 52 wegbewegt und verhindert so einen Konflikt in einem, dem bedienungsseitigen Ende 93 abgewandten Bereich, zwischen dem Betätigungshebel 22 und dem Armaturengehäuse 12.

Wird der Betätigungshebel 22 weiter in Richtung der maximalen Offenstellung hochgeschwenkt, so bewegt die Lasche 58, das Führungselement 60, beziehungsweise den Betätigungshebel 22 weiter in Richtung vom Steuerschaft 52 weg. Dies ist in Fig. 12 gezeigt. Der Öffnungswinkel α beträgt dabei 20°. In dieser Öffnungsstellung des Betätigungshebels 22 ist die Längsrichtung der Lasche 58 parallel zur Patronenachse B ausgerichtet und der Betätigungshebel 22 weist, in Richtung der Patronenachse B gesehen, den grössten Abstand zum Armaturengehäuse 12 auf. Der Betätigungshebel 22 befindet sich in dieser Position in einem Zenit. Wird der Betätigungshebel 22 weiter in Richtung der Offenstellung hochgeschwenkt, so verringert sich dieser Abstand wieder. Das Gleiche gilt für das Niederschwenken des Betätigungshebels 22, aus der in Fig. 12 gezeigten Öffnungsstellung in Richtung der Schliessstellung.

Wird der Betätigungshebel 22 aus der in Fig. 12 gezeigten Öffnungsstellung weiter hochgeschwenkt, so kommt er in einer maximalen Offenstellung bei einem Öffnungswinkel α von 25° zu liegen. Dabei liegt die Lasche 58 an der Ausnehmung 92 im Lagerelement 54 an und ein weiteres Hochschwenken ist verhindert.

Fig. 13 und 14 zeigen diese maximale Offenstellung. In dieser maximalen Offenstellung hat die obere Anlenkung 88 den Zenit, bei dem die Längsrichtung der Lasche 58 parallel zur Patronenachse B verläuft, überschritten und wird wieder in Richtung auf den Steuerschaft 52 zu bewegt.

Fig. 13 zeigt die Sanitärarmatur 10 in der maximalen Offenstellung in einem Längschnitt entlang der Linie II - II der Fig. 3. Aufgrund der gut erkennbaren, gegenseitigen Lage von Führungselement 60 und Gleitelement 59 ist gegenüber der Fig. 2 sehr gut ersichtlich, dass bei der Schwenkbewegung des Betätigungshebels 22 in Richtung der maximalen Offenstellung, dieser in Richtung der Schwenkachse A wegbewegt worden ist. Umgekehrt wird, bei einer Schwenkbewegung des Betätigungshebels 22 in Richtung der Schliessstellung, der Betätigungshebel 22 in Richtung auf die Schwenkachse A zu bewegt.

Somit wird über den gesamten Schwenkbereich des Betätigungshebels 22 ein Konflikt zwischen dem Armaturengehäuse 12 und dem Betätigungshebel 22, im vorliegenden Fall auch des Betätigungshebeleinsatzes 62, verhindert.

Die Temperatur des Mischwasser kann durch Drehen des Betätigungshebels 22 um die Längsrichtung des Steuerschafts 52, in jeder Schwenklage des Betätigungshebels 22, konfliktfrei bezüglich des Armaturengehäuses 12, in bekannter Art und Weise eingestellt werden.

Es ist auch denkbar die Sanitärarmatur 10 mit nur einer Lasche 58 auszubilden. Im Weiteren ist es möglich, die obere Anlenkung 88 der Lasche 58 anders zu wählen, und diese zum Beispiel direkt am kappenförmigen Deckelabschnitt 102 des Betätigungshebeleinsatzes 62, oder am Betätigungshebel 22 auszubilden. Letzteres ist von besonderem Vorteil, wenn das Führungselement 60 direkt am Betätigungshebel 22 angeordnet ist.

Eine weitere Alternative der vorliegenden Erfindung besteht darin, mehrere Laschen 58 in einer Art Parallelogramm anzuordnen und so die gewünschte Bewegung, beim Bewegen des Betätigungshebels 22 von der Schliessstellung in die Offenstellung, in Richtung vom Steuerschaft 52 weg, beziehungsweise von dem Armaturengehäuse 12 weg, zu erreichen. Um dies zu ermöglichen, müsste das Führungselement 60 schwenkbar am Betätigungshebeleinsatz 62, beziehungsweise am Betätigungshebel 22, gelagert sein. Falls das Parallelogramm durch gleich lange Laschen 58 ausgebildet ist, behält der Betätigungshebel 22, beim Bewegen aus der Schliessstellung in Richtung gegen die Offenstellung, eine zu sich parallele Lage. Die Laschen 58 können aber auch ungleich lang ausgebildet sein, was beim Bewegen des Betätigungshebels 22, zu einer überlagerten Schwenkbewegung führen würde.

## Patentansprüche

1. Sanitärarmatur (10) mit einem Armaturengehäuse (12), einer in diesem angeordneten, eine Patronenachse (B) festlegenden sowie einen um eine rechtwinklig zur Patronenachse (B) verlaufende Schwenkachse (A) schwenkbaren Steuerschaft (52) aufweisenden Steuerpatrone (36) und einem mit dem Steuerschaft (52) zusammenwirkenden, ein bedienungsseitiges Ende aufweisenden Betätigungshebel (22), der zwischen einer Schliessstellung und einer Offenstellung hoch- und niederschwenkbar ist, um den Steuerschaft (52) um die Schwenkachse (A) zu verschwenken und dabei den Wasserfluss zu steuern, wobei ein am Betätigungshebel (22) angeordnetes Führungselement (60) am Steuerschaft (52) verschiebbar gelagert ist und eine Lasche (58) einerends am Führungselement (60) und anderenends an einer bezüglich der Schwenkachse (A) fest angeordneten und zu dieser parallelen Drehachse (C) gelagert ist, um beim Schwenken des Betätigungshebels (22) aus der Schliessstellung in Richtung gegen die Offenstellung den Betätigungshebel (22) in Richtung vom Steuerschaft (52) und, in Richtung der Patronenachse (B) gesehen, vom Armaturengehäuse (12) weg zu bewegen.

2. Sanitärarmatur gemäss Anspruch 1, **dadurch gekennzeichnet, dass** - in der Schliessstellung - die Längsrichtung der Lasche (58) mit der Patronenachse (B) - in Ansicht in Richtung der Schwenkachse (A) gesehen - einen spitzen Winkel (Ω) bildet und dass die Drehachse (C), bezüglich der Patronenachse (B), auf einer dem bedienungsseitigen Ende abgewandten Seite angeordnet ist.

3. Sanitärarmatur gemäss Anspruch 1 oder 2, **dadurch gekennzeichnet, dass** der Betätigungshebel (22) mit dem Führungselement (60) unbeweglich verbunden ist.

4. Sanitärarmatur gemäss Anspruch 1 bis 3, **dadurch gekennzeichnet, dass** ein Lagerelement (54), vorzugsweise um die Patronenachse (B) drehbar, am Armaturengehäuse (12) angeordnet und dass die Drehachse (C) der Lasche (58) durch das Lagerelement (54) festgelegt ist.

5. Sanitärarmatur gemäss Anspruch 4, **dadurch gekennzeichnet, dass** ein zur schwenkbaren Lagerung der Lasche (58) zur Drehachse (C) koaxial verlaufender Lagerstift (90) am Lagerelement (54) angeordnet ist.

6. Sanitärarmatur gemäss einem der Ansprüche 1 bis 5, **dadurch gekennzeichnet, dass** seitlich am Führungselement (60) zwei Laschen (58), auf jeder Seite je eine, angeordnet sind, die sich in je einer, zu einer Bewegungsebene des Steuerschafts (52) parallelen Ebene bewegen.

7. Sanitärarmatur gemäss einem der Ansprüche 1 bis 6, **dadurch gekennzeichnet, dass** der Betätigungshebel (22), bei Ausrichtung der Längsrichtung der Lasche (58) parallel zur Patronenachse (B), in Richtung der Patronenachse (B) gesehen, den grössten Abstand zum Armaturengehäuse (12) aufweist.

8. Sanitärarmatur gemäss einem der Ansprüche 1 bis 7, **dadurch gekennzeichnet, dass** die äussere Mantelfläche (20) des Armaturengehäuses (12) wenigstens annähernd kreiszylinderförmig ausgebildet ist und der Betätigungshebel (22) - in der Schlissstellung - unter Bildung eines in Umfangsrichtung umlaufenden Spalts konstanter, vorzugsweise sehr schmaler Breite, an die kreiszylinderförmige äussere Mantelfläche (20) anschliesst.

9. Sanitärarmatur gemäss einem der Ansprüche 1 bis 8, **dadurch gekennzeichnet, dass** der Steuerschaft (52) zusammen mit dem Betätigungshebel um die Patronenachse (B) drehbar gelagert ist.
